# EUROPEAN PATENT SPECIFICATION

(11) **EP 1 460 246 B1**
(45) Date of publication and mention of the grant of the patent: **09.01.2008**
(21) Application number: 04101011.7
(22) Date of filing: 11.03.2004
(51) Int. Cl.: F01N 11/00

(54) **Method for estimating the degradation of the trapping capacity of a NOx-trap type catalytic converter**
Verfahren zum Abschätzen der Verschlechterung der Speicherkapazität eines NOx-Speicherkatalysators
Procédé pour estimer la dégradation de la capacité de piégage d'un catalyseur du type piège à oxydes d'azote

(30) Priority: 13.03.2003 IT BO20030136
(43) Date of publication of application: 22.09.2004
(73) Proprietor: MAGNETI MARELLI POWERTRAIN S.p.A., 20011 Corbetta (IT)
(72) Inventor: Palma, Alessandro, 44100 Ferrara (IT); Gorgoretti, Lorenzo, 65125 Pescara (IT); Lambertini, Loris, 40056 Crespellano (IT)
(74) Representative: Jorio, Paolo

(56) References cited:
- WO-A-01/53672
- DE-A- 10 023 060
- DE-A- 19 945 374
- GB-A- 2 342 597
- US-B1- 6 171 565
- US-B1- 6 408 615

## Description

The present invention relates to a method for estimating the degradation of the trapping capacity of a NOx-Trap type catalytic converter.

The present invention is advantageously applied to an internal combustion automotive engine supplied with fuel by direct injection of petrol into the cylinders and having combustion with a lean mixture and stratified charge, to which the following description will make explicit reference without thereby restricting the general scope.

A direct injection petrol engine comprises an exhaust manifold, which communicates with the cylinders by means of the respective exhaust valves and terminates in an exhaust pipe equipped with a precatalytic converter capable of promoting the conversion of the NO groups produced during combustion into NO₂ and a subsequent NOx-Trap catalytic converter capable of trapping the NOₓ groups and so preventing their release into the atmosphere. The NOx-Trap catalytic converter traps within itself both the NOₓ groups produced during combustion and the sulfur (in the form of SOₓ) that is contained in the fuel and is released during combustion; moreover, the NOx-Trap catalytic converter itself has a limited trapping capacity (generally of between 3 and 5 grams) and when said trapping capacity is exhausted, the NOx-Trap catalytic converter must be cleaned by a regeneration process.

The total mass of NOₓ groups produced during combustion is much greater than the mass of sulfur released during combustion; moreover the regeneration process to remove NOₓ groups (a few seconds of rich combustion) is much shorter than the regeneration process to remove sulfur (of the order of 30-60 seconds of rich combustion combined with an internal temperature in the catalytic converter that is very much higher than the normal operating temperature). For the reasons stated above, the regeneration process to remove NOₓ groups is normally carried out every 45-75 seconds of engine operation, whereas the regeneration process to remove sulfur is normally carried out every 6-12 hours of engine operation.

The regeneration processes are scheduled by a central control unit using a storage model for the NOx-Trap catalytic converter, said model being based on a knowledge of the estimated trapping capacity of the NOx-Trap catalytic converter, and using a model of the production of NOₓ and SOₓ group by the engine. Each time NOₓ regeneration of the NOx-Trap catalytic converter is performed, the central control unit checks, using the signal from a lambda probe and/or a NOₓ probe provided downstream from the NOx-Trap catalytic converter, whether the duration of the NOₓ regeneration process is less than a predetermined value on the basis of the current model; if this is the case, i.e. if the duration of the NOₓ regeneration process is less than the predetermined value, it is clear that the NOx-Trap catalytic converter has trapped a smaller quantity of NOₓ than predicted and the central control unit accordingly assumes that said phenomenon is due to degradation of the NOx-Trap catalytic converter and reduces the estimate of the trapping capacity of the NOx-Trap catalytic converter used in the storage model for the NOx-Trap catalytic converter.

However, experimental trials have revealed that, when the above-described method is used, there is a tendency to underestimate the actual trapping capacity of the NOx-Trap catalytic converter, with a consequent increase in fuel consumption (and thus in the level of atmospheric emissions), due to the fact that underestimating the actual trapping capacity of the NOx-Trap catalytic converter results in NOₓ regeneration processes being carried out more frequently.

US6171565B1 discloses a process of operating a nitrogen oxides storage catalyst of an exhaust gas treatment system. The process relates to the cycling of the normalized air/fuel ratio λ-value of the exhaust gas exiting the engine, in which a lambda value greater than 1 represents oxygen-rich, lean burn conditions in which a sorption phase for the sorption of nitrogen oxides takes place; and in which a lambda value less than 1 represents oxygen-poor, rich burn conditions in which a desorption and conversion phase for the desorption and conversion of nitrogen oxides takes place. The λ-value of the exhaust gas downstream from the storage catalyst is monitored during the desorption and conversion phase to determine the end of the desorption and conversion phase based on the λ-value falling below a predetermined threshold value.

The object of the present invention is to provide a method for estimating the degradation of the trapping capacity of a NOx-Trap type catalytic converter, which method does not have the above-described disadvantages and, in particular, is simple and economical to implement.

The present invention provides a method for estimating the degradation of the trapping capacity of a NOx-Trap type catalytic converter as defined in Claim 1 and, preferably, in any one of the subsequent claims directly or indirectly subordinate to Claim 1.

The present invention will now be described with reference to the attached drawing, which illustrates a non-limiting embodiment; in particular, the attached figure is a schematic view of an internal combustion engine, which is controlled by a control unit that implements the estimation method provided by the present invention.

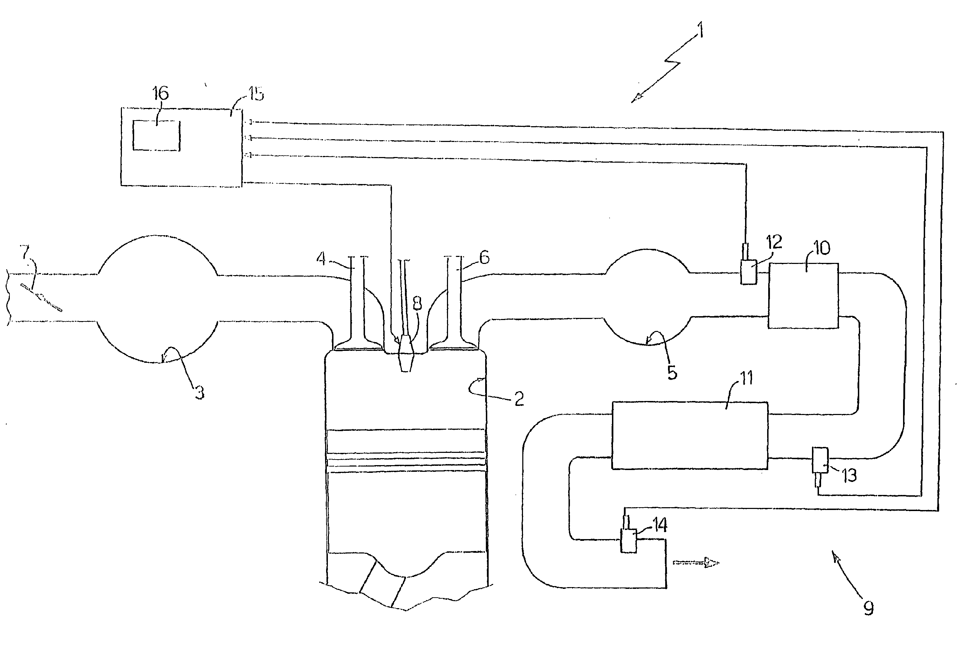

In the attached figure, 1 denotes the overall internal combustion engine equipped with four cylinders 2 (only one of which is shown in Figure 1), each of which is connected to an intake manifold 3 via at least one respective intake valve 4 and to an exhaust manifold 5 via at least one respective exhaust valve 6. The intake manifold 3 receives fresh air (i.e. air originating from the outside environment) via a throttle valve 7 that is adjustable between a closed position and a maximally open position. Petrol is injected directly into each cylinder 2 by a respective injector 8.

From the exhaust manifold 5 there leaves an exhaust pipe 9, which comprises a catalytic preconverter 10 and a subsequent NOx-Trap catalytic converter 11; inside the exhaust pipe 9 there is installed a UEGO probe 12, which is arranged upstream from the catalytic preconverter 10 and is capable of detecting the quantity of oxygen present in the exhaust gases entering the catalytic preconverter 10, a temperature sensor 13, which is arranged between the catalytic preconverter 10 and NOx-Trap catalytic converter 11 and is capable of detecting the temperature of the gases entering the NOx-Trap catalytic converter 11, and a multisensor 14, which is arranged downstream from the NOx-Trap catalytic converter 11 and is capable of detecting either the presence of NOₓ groups (nitrogenous group sensor) or the quantity of oxygen present relative to stoichiometric conditions (lambda probe) in the exhaust gases leaving the NOx-Trap catalytic converter 11 (i.e. in the exhaust gases released from the exhaust pipe 9 into the atmosphere).

The engine 1 furthermore comprises a control unit 15 which, inter alia, on each cycle controls the throttle valve 7 and the injector 8 to fill the cylinder 2 with a quantity of combustion agent (fresh air) and fuel in a specific ratio as a function of the operating conditions of the engine 1 and as a function of the commands received from the driver; in particular, the control unit 15 is capable of causing the engine 1 to operate by combustion with a lean mixture and stratified charge. In order to allow the control unit 15 to capture the data required for correct operation thereof, the control unit 15 is connected to the UEGO probe 12, the temperature sensor 13 and the multisensor 14.

In service, the NOx-Trap catalytic converter 11 stores either the NOₓ groups produced during combustion or the sulfur (in the form of SOₓ) contained in the fuel and released during combustion, in order to prevent said constituents from being released directly into the atmosphere. The NOx-Trap catalytic converter 11 has a limited trapping capacity C for NOₓ groups and sulfur (normally amounting to 4 grams) and when said trapping capacity C is exhausted the NOx-Trap catalytic converter 11 must be cleaned by means of a regeneration process. The total mass of NOₓ groups produced during combustion is much greater than the mass of sulfur released during combustion, and moreover the regeneration process to remove NOₓ groups (a few seconds of rich combustion of the engine) is much shorter than the regeneration process to remove sulfur (indicatively 30-60 seconds of rich combustion combined with an internal temperature in the NOx-Trap catalytic converter 11 that is very much higher than the normal operating temperature). For the reasons stated above, the regeneration process to remove NOₓ groups is normally carried out every 45-75 seconds of operation of the engine 1, whereas the regeneration process to remove sulfur (also known as the desulfation process) is normally carried out every 6-12 hours of operation of the engine 1.

The regeneration processes are scheduled by the central control unit 15 using a storage model for the NOx-Trap catalytic converter 11, said model being stored in a memory 16 and based on a knowledge of the estimated trapping capacity C of the NOx-Trap catalytic converter 11, and using a model of the production of NOₓ and SOₓ groups by the engine 1, said model being stored in the memory 16. In particular, the quantity of NOₓ produced by the engine 1 is obtained in known manner by the control unit 15 using maps that state the specific quantity (i.e. the quantity per unit of fuel injected into the cylinders 2) of NOₓ and SOₓ groups produced by the engine 1 as a function of engine status (typically as a function of engine speed and as a function of delivered torque). As is known, the above-mentioned models are determined by means of a theoretical analysis of the systems and by means of a series of laboratory tests carried out on the engine 1 equipped with a series of auxiliary measurement sensors, which are capable of providing an instantaneous and accurate measurement of all the parameters involved in the operation of the engine 1 itself.

During normal operation of the engine 1 and using the storage model for the NOx-Trap catalytic converter 11, the control unit 15 estimates the quantity of NOₓ groups stored in the NOx-Trap catalytic converter 11; when said quantity of stored NOₓ groups exceeds a predetermined threshold, the control unit 15 triggers performance of the NOₓ regeneration process. The NOₓ regeneration process is of a predetermined duration (stored in the memory 16) such that the NOₓ regeneration process is performed only for the time required to remove the NOₓ groups stored in the NOx-Trap catalytic converter 11.

During the NOₓ regeneration process of the NOx-Trap catalytic converter 11, the control unit 15 monitors the signal from the multisensor 14; in particular, if no transition in the signal from the multisensor 14 from lean to rich is detected during the NOₓ regeneration process, then it is assumed that the actual duration of the NOₓ regeneration process matches the predetermined duration and that thus the storage capacity C of the NOx-Trap catalytic converter 11 is unchanged whereas, if a transition in the signal from the multisensor 14 from lean to rich is detected during the NOₓ regeneration process, then the actual duration of the NOₓ regeneration process was less than the predetermined duration and thus the NOₓ storage capacity C has clearly diminished. The signal from the multisensor 14 is significant because, while the reduction process of the NOₓ groups stored in the NOx-Trap catalytic converter 11 is under way, there is an excess of oxygen (relative to the stoichiometric value) in the exhaust gases downstream from the NOx-Trap catalytic converter 11, said excess arising from the reduction of the NOₓ groups, whereas once the reduction process of the NOₓ groups stored in the NOx-Trap catalytic converter 11 is complete, there is a deficit of oxygen (relative to the stoichiometric value) in the exhaust gases downstream from the NOx-Trap catalytic converter 11 because a rich mixture is supplied to the cylinders 2 during the regeneration process. It is clear from the above description that the signal from the multisensor 14 can also be used for estimating the actual duration of a NOₓ regeneration process, because, if no transition in the signal from the multisensor 14 from lean to rich is detected during the NOₓ regeneration process, then it is assumed that the actual value of the duration of the NOₓ regeneration process matches the predicted value whereas, if a transition in the signal from the multisensor 14 from lean to rich is detected during the NOₓ regeneration process, then the actual value of the duration of the NOₓ regeneration process is less than the calculated value and is equal to the period of time that has elapsed between the moment at which the regeneration process was initiated and the moment at which the transition in the signal from the multisensor 14 occurred.

If, during the NOₓ regeneration process of the NOx-Trap catalytic converter 11, the control unit 15 detects the above-described anomalous transition in the signal from the multisensor 14, then the control unit 15 attempts to determine the cause that led to the degradation of the trapping capacity C of the NOx-Trap catalytic converter 11 and thus attempts, if possible, to remedy such degradation. In particular, when the control unit 15 detects the anomalous transition in the signal from the multisensor 14, then the control unit 15 increases the operating temperature (indicatively by a step of 20-40°C) of the NOx-Trap catalytic converter 11 by acting in known manner on the control of the throttle valve 7 and the injector 8 and awaits performance of the subsequent NOₓ regeneration process; if, during the subsequent NOₓ regeneration process, the control unit 15 again detects the anomalous transition in the signal from the multisensor 14, then the control unit 15 further increases the operating temperature (indicatively by a step of 20-40°C) of the NOx-Trap catalytic converter 11 and awaits performance of the subsequent NOₓ regeneration process. Said process of increasing the operating temperature of the NOx-Trap catalytic converter 11 is continued in cycles not until the operating temperature of the NOx-Trap catalytic converter 11 reaches a predetermined limiting value, but instead until the control unit 15 ceases to detect the anomalous transition in the signal from the multisensor 14; in this latter case, i.e. if the increase in the operating temperature of the NOx-Trap catalytic converter 11 has led to the disappearance of the anomalous transition in the signal from the multisensor 14, then the control unit 15 increases the minimum value of the operating temperature of the NOx-Trap catalytic converter 11 stored in the memory 16 by a predetermined quantity because the reduction in the trapping capacity C of the NOx-Trap catalytic converter 11 is essentially due to thermal degradation and can be at least partly offset by increasing the operating temperature of the NOx-Trap catalytic converter 11. Obviously, the control unit 15 does not increase the minimum value of the operating temperature of the NOx-Trap catalytic converter 11 beyond a predetermined threshold value in order to maintain an acceptably wide operating temperature range for the NOx-Trap catalytic converter 11.

If, on the other hand, the increase in the operating temperature of the NOx-Trap catalytic converter 11 did not lead to the disappearance of the anomalous transition in the signal from the multisensor 14, then the control unit 15 performs an unscheduled desulfation process with a temperature value for the NOx-Trap catalytic converter 11 and an average value for ratio equal to the corresponding values used during the preceding desulfation processes. On completion of the unscheduled desulfation process, the control unit 15 awaits performance of the subsequent NOₓ regeneration process.

If, during the subsequent NOₓ regeneration process, the anomalous transition in the signal from the multisensor 14 no longer occurs, then the control unit 15 increments the temperature value of the NOx-Trap catalytic converter 11 and decrements the average value for ratio used during future desulfation processes because the reduction in the trapping capacity C of the NOx-Trap catalytic converter 11 is essentially due to the formation of particularly tenacious sulfur crystals. Obviously, the control unit 15 does not increase the temperature value for the NOx-Trap catalytic converter 11 nor does it decrement the average value for ratio used during desulfation processes beyond the respective predetermined thresholds.

If, on the other hand, the anomalous transition in the signal from the multisensor 14 still occurs in the subsequent NOₓ regeneration process, then the control unit 15 assumes that this phenomenon is due to irreversible degradation of the NOx-Trap catalytic converter 11 and thus reduces the estimated trapping capacity C of the NOx-Trap catalytic converter 11 used in the storage model for the NOx-Trap catalytic converter 11 by a predetermined amount.

According to another embodiment, the predicted duration of the NOₓ regeneration process of the NOx-Trap catalytic converter 11 is not assumed to be equal to a predetermined value stored in the memory 16, but is calculated before performing the NOₓ regeneration process by using the storage model for the NOx-Trap catalytic converter 11 and using the model of the production of NOₓ and SOₓ group by the engine 1 in such a manner that the NOₓ regeneration process only lasts for the time strictly necessary to remove the NOₓ groups trapped in the NOx-Trap catalytic converter 11.

From the above explanation, it is clear the control unit 15, before reducing the estimated trapping capacity C of the NOx-Trap catalytic converter 11 used in the storage model for the NOx-Trap catalytic converter 11, attempts to identify the cause of the degradation of the trapping capacity C of the NOx-Trap catalytic converter 11 and attempts, if possible, to remedy such degradation; by using this method, it is possible to avoid underestimating the actual trapping capacity C of the NOx-Trap catalytic converter 11 and thus to avoid increasing the frequency of NOₓ regeneration processes beyond what is strictly necessary.

## Claims

1. Method for estimating the degradation of the trapping capacity (C) of a NOx-Trap catalytic converter (11); the method comprising the steps of:
performing a first NOₓ regeneration process of a predetermined duration;
determining whether the duration of the first NOₓ regeneration process is equal to a predetermined duration; and
assuming that the trapping capacity (C) is unchanged if the duration of the first NOₓ regeneration process is equal to the predetermined duration;
the method **being characterised in** comprising the further steps of:
performing, if the duration of the first NOₓ regeneration process is less than the predetermined duration and in order to attempt to counteract the degeneration of the NOx-Trap catalytic converter (11), at least one corrective action, which comprises increasing the operating temperature of the NOx-Trap catalytic converter (11) and/or performing an unscheduled desulfation process;
performing a second NOx regeneration process;
determining whether the duration of the second NOx regeneration process is equal to the predetermined duration;
using, if the duration of the second NOx regeneration process is equal to the predetermined duration, new characteristic operating parameters for the corrective action for the subsequent life of the NOx-Trap catalytic converter (11); and
reducing, if the duration of the second NOx regeneration process is less than the predetermined duration, the estimated value of the trapping capacity (C) of the NOx-Trap catalytic converter (11).

2. Method according to Claim 1, wherein the signal of an ON/OFF type lambda sensor (14) arranged downstream from the NOx-Trap catalytic converter (11) is used to determine whether the duration of a NOₓ regeneration process is equal to the predetermined duration.

3. Method according to Claim 2, wherein, if no transition in the signal from the lambda sensor (14) is detected during the NOₓ regeneration process, then it is assumed that the duration of the NOₓ regeneration process is equal to the predetermined duration whereas, if a transition in the signal from the lambda sensor (14) is detected during the NOₓ regeneration process, then it is assumed that the duration of the NOₓ regeneration process is less than the predetermined duration.

4. Method according to one of Claims 1 to 3 in which the corrective action provides for increasing the operating temperature of the NOx-Trap catalytic converter (11); if the duration of the second NOx regeneration process is equal to the predetermined duration, then the minimum value of the operating temperature of said NOx-Trap catalytic converter (11) is increased for the subsequent life of the NOx-Trap catalytic converter (11).

5. Method according to Claim 4, wherein the minimum value of the operating temperature of the NOx-Trap catalytic converter (11) is not increased beyond a respective predetermined threshold value.

6. Method according to Claim 4 or 5, wherein the operating temperature of the NOx-Trap catalytic converter (11) is increased by means of a number of successive increments of a determined size; after each increment, the performance of a subsequent NOx regeneration process is awaited and, if the duration of the subsequent NOx regeneration process is less than the predetermined duration, then a further increment is performed whereas, if the duration of the subsequent NOx regeneration process is equal to the predetermined duration, then incrementation of the operating temperature of the NOx-Trap catalytic converter (11) is ceased and the minimum value of the operating temperature of said NOx-Trap catalytic converter (11) is increased.

7. Method according to Claim 6, wherein the value of the operating temperature of the NOx-Trap catalytic converter (11) is not increased beyond a respective predetermined threshold value.

8. Method according to one of Claims 1 to 3, wherein the corrective action provides for performing an unscheduled desulfation process and, on completion of the unscheduled desulfation process, awaiting performance of a second NOx regeneration process ; if the duration of the second NOx regeneration process is equal to the predetermined duration, then the temperature of the NOx-Trap catalytic converter (11) used during future desulfation processes is incremented.

9. Method according to Claim 8, wherein the temperature of the NOx-Trap catalytic converter (11) used during the desulfation processes is not modified beyond a respective predetermined threshold value.

10. Method according to one of Claims 1 to 3 in which the corrective action provides for increasing the operating temperature of the NOx-Trap catalytic converter (11); if the duration of the second NOx regeneration process is equal to the predetermined duration, then the minimum value of the operating temperature of said NOx-Trap catalytic converter (11) is increased for the subsequent life of the NOx-Trap catalytic converter (11); if the duration of the second NOx regeneration process is less than the predetermined duration, then an unscheduled desulfation process is performed and, on completion of the unscheduled desulfation process, performance of a subsequent NOx regeneration process is awaited; if the duration of the subsequent NOx regeneration process is equal to the predetermined duration, then the temperature of the NOx-Trap catalytic converter (11) used during future desulfation processes is incremented; if the duration of the subsequent NOx regeneration process is less than the predetermined duration, then the estimated trapping capacity (C) of the NOx-Trap catalytic converter (11) is reduced.

11. Method according to Claim 10, wherein the operating temperature of the NOx-Trap catalytic converter (11) is increased by means of a number of successive increments of a determined size; after each increment, the performance of a subsequent NOₓ regeneration process is awaited and, if the duration of the subsequent NOx regeneration process is less than the predetermined duration, then a further increment is performed whereas, if the duration of the subsequent NOx regeneration process is equal to the predetermined duration, then incrementation of the operating temperature of the NOx-Trap catalytic converter (11) is ceased and the minimum value of the operating temperature of the NOx-Trap catalytic converter (11) is increased.

12. Method according to Claim 11, wherein the value of the operating temperature of the NOx-Trap catalytic converter (11) is not increased beyond a respective predetermined threshold value.

13. Method according to one of Claims 1 to 12, wherein the predicted value for the duration of the NOₓ regeneration process is calculated using a storage model of the NOx-Trap catalytic converter (11), said model being based on an estimate of the trapping capacity (C) of the NOx-Trap catalytic converter (11), such that the NOₓ regeneration process only lasts for the time that is strictly necessary to remove the NOₓ groups trapped in the NOx-Trap catalytic converter (11).

## Patentansprüche

1. Verfahren zum Abschätzen der Verringerung der Speicherkapazität (C) eines NOx-Speicherkatalysators (11), wobei das Verfahren die Schritte umfasst:
durchführen eines ersten NOx-Regenerierungsprozesses einer vorbestimmten Dauer;
bestimmen, ob die Dauer des ersten NOx-Regenerierungsprozesses gleich einer vorbestimmten Dauer ist; und
annehmen, dass die Speicherkapazität (C) unverändert ist, sofern die Dauer des ersten NOx-Regenerierungsprozesses gleich der vorbestimmten Dauer ist;
wobei das Verfahren **dadurch gekennzeichnet ist, dass** es die weiteren Schritte umfasst:
durchführen, mindestens einer Korrekturmaßnahme, welche die Erhöhung der Betriebstemperatur des NOx-Speicherkatalysators (11) und/oder die Durchführung eines außerplanmäßigen Desulfatierungsprozesses umfasst; sofern die Dauer des ersten NOx-Regenerierungsprozesses geringer ist als die vorbestimmte Dauer und um zu versuchen, der Degenerierung des NOx-Speicherkatalysators (11) entgegenzuwirken,
durchführen eines zweiten NOx-Regenerierungsprozesses;
bestimmen, ob die Dauer des zweiten NOx-Regenerierungsprozesses gleich der vorbestimmten Dauer ist;
verwenden, von neuen charakteristischen Betriebsparametern für die Korrekturmaßnahme für die nachfolgende Laufzeit des NOx-Speicherkatalysators (11), sofern die Dauer des zweiten NOx-Regenerierungsprozesses gleich der vorbestimmten Dauer ist; und
reduzieren, des geschätzten Wertes der Speicherkapazität (C) des NOx-Speicherkatalysators (11), sofern die Dauer des zweiten NOx-Regenerierungsprozesses geringer ist als die vorbestimmte Dauer.

2. Verfahren nach Anspruch 1, wobei das Signal eines EIN-AUS-Lambdasensors (14), der dem NOx-Speicherkatalysator (11) nachgeschaltet ist, verwendet wird, um zu bestimmen, ob die Dauer eines NOx-Regenerierungsprozesses gleich der vorbestimmten Dauer ist.

3. Verfahren nach Anspruch 2, wobei, sofern kein Übergang in dem Signal von dem Lambdasensor (14) während des NOx-Regenerierungsprozesses nachgewiesen wird, angenommen wird, dass die Dauer des NOx-Regerierungsprozesses gleich der vorbestimmten Dauer ist, wohingegen im Fall, dass ein Übergang in dem Signal von dem Lamdasensor (14) während des NOx-Regenerierungsprozesses nachgewiesen wird, angenommen wird, dass die Dauer des NOx-Regenerierungsprozesses geringer ist als die vorbestimmte Dauer.

4. Verfahren nach einem der Ansprüche 1 bis 3, wobei die Korrekturmaßnahme das Erhöhen der Betriebstemperatur des NOx-Speicherkatalysators (11) vorsieht; sofern die Dauer des zweiten NOx-Regenerierungsprozesses gleich der vorbestimmten Dauer ist, wird der Minimalwert der Betriebstemperatur des NOx-Speicherkatalysators (11) für die nachfolgende Laufzeit des NOx-Speicherkatalysators (11) erhöht.

5. Verfahren nach Anspruch 4, wobei der Minimalwert der Betriebstemperatur des NOx-Speicherkatalysators (11) nicht über einen jeweiligen vorbestimmten Schwellenwert hinaus erhöht wird.

6. Verfahren nach Anspruch 4 oder 5, wobei die Betriebstemperatur des NOx-Speicherkatalysators (11) mittels einer Anzahl aufeinander folgender Steigerungen einer bestimmten Größe erhöht wird, wobei nach jeder Steigerung die Durchführung eines nachfolgenden NOx-Regenerierungsprozesses abgewartet wird, und, sofern die Dauer des nachfolgenden NOx-Regenerierungsprozesses geringer ist als die vorbestimmte Dauer, dann eine weitere Steigerung durchgeführt wird, wohingegen sofern die Dauer des nachfolgenden NOx-Regenerierungsprozesses gleich der vorbestimmten Dauer ist, dann die Steigerung der Betriebstemperatur des NOx-Speicherkatalysators (11) beendet wird und der Minimalwert der Betriebstemperatur des NOx-Speicherkatalysators (11) erhöht wird.

7. Verfahren nach Anspruch 6, wobei der Wert der Betriebstemperatur des NOx-Speicherkatalysators (11) nicht über einen jeweiligen vorbestimmten Schwellenwert hinaus erhöht wird.

8. Verfahren nach einem der Ansprüche 1 bis 3, wobei die Korrekturmaßnahme das Durchführen eines außerplanmäßigen Desulfatierungsprozesses und nach Beendigung des außerplanmäßigen Desulfatierungsprozesses das Abwarten der Durchführung eines zweiten NOx-Regenerierungsprozesses vorsieht; sofern die Dauer des zweiten NOx-Regenerierungsprozesses gleich der vorbestimmten Dauer ist, wird dann die Temperatur des NOx-Speicherkatalysators (11), die während zukünftiger Desulfatierungsprozesse verwendet wird, erhöht.

9. Verfahren nach Anspruch 8, wobei die Temperatur des NOx-Speicherkatalysators (11), die während der Desulfatierungsprozesse verwendet wird, nicht über einen jeweiligen vorbestimmten Schwellenwert hinaus modifiziert wird.

10. Verfahren nach einem der Ansprüche 1 bis 3, wobei die Korrekturmaßnahme das Erhöhen der Betriebstemperatur des NOx-Speicherkatalysators (11) vorsieht; sofern die Dauer des zweiten NOx-Regenerierungsprozesses gleich der vorbestimmten Dauer ist, wird dann der Minimalwert der Betriebstemperatur des NOx-Speicherkatalysators (11) für die nachfolgende Laufzeit des NOx-Speicherkatalysators (11) erhöht; sofern die Dauer des zweiten NOx-Regenerierungsprozesses geringer ist als die vorbestimmte Dauer, wird ein außerplanmäßiger Desulfatierungsprozess durchgeführt und nach Beendigung des außerplanmäßigen Desulfatierungsprozesses die Durchführung eines nachfolgenden NOx-Regenerierungsprozesses abgewartet; sofern die Dauer des nachfolgenden NOx-Regenerierungsprozesses gleich der vorbestimmten Dauer ist, wird die Temperatur des NOx-Speicherkatalysators (11), die während zukünftiger Desulfatierungsprozesse verwendet wird, erhöht; sofern die Dauer des nachfolgenden NOx-Regenerierungsprozesses geringer ist als die vorbestimmte Dauer, wird die geschätzte Speicherkapazität (C) des NOx-Speicherkatalysators (11) reduziert.

11. Verfahren nach Anspruch 10, wobei die Betriebstemperatur des NOx-Speicherkatalysators (11) mittels einer Anzahl aufeinander folgender Steigerungen einer bestimmten Größe erhöht wird; wobei nach jeder Steigerung die Durchführung eines nachfolgenden NOx-Regenerierungsprozesses abgewartet wird; und sofern die Dauer des nachfolgenden NOx-Regenerierungsprozesses geringer ist als die vorbestimmte Dauer, wird dann eine weitere Steigerung durchgeführt; sofern die Dauer des nachfolgenden NOx-Regenerierungsprozesses gleich der vorbestimmten Dauer ist; wird dann die Steigerung der Betriebstemperatur des NOx-Speicherkatalysators (11) beendet und der Minimalwert der Betriebstemperatur des NOx-Speicherkatalysators (11) erhöht.

12. Verfahren nach Anspruch 11, wobei der Wert der Betriebstemperatur des NOx-Speicherkatalysators (11) nicht über einen jeweiligen vorbestimmten Schwellenwert hinaus erhöht wird.

13. Verfahren nach einem der Ansprüche 1 bis 12, wobei der vorhergesagte Wert für die Dauer des NOx-Regenerierungsprozesses unter Verwendung eines Speichermodells des NOx-Speicherkatalysators (11) berechnet wird, wobei das Modell auf einer Schätzung der Speicherkapazität (C) des NOx-Speicherkatalysators (11) basiert, sodass der NOx-Regenerierungsprozess nur für die Zeitspanne andauert, die unbedingt nötig ist, um die NOx-Gruppen zu entfernen, die in dem NOx-Speicherkatalysator (11) zurückgehalten werden.

## Revendications

1. Procédé pour estimer la dégradation de la capacité de piégeage (C) d'un pot catalytique à piège à NOₓ (11) ; le procédé comprenant les étapes consistant à :
réaliser un premier procédé de régénération de NOₓ d'une durée prédéterminée ;
déterminer si la durée du premier procédé de régénération de NOₓ est égale à une durée prédéterminée ou non ; et
supposer que la capacité de piégeage (C) est inchangée si la durée du premier procédé de régénération de NOₓ est égale à la durée prédéterminée ;
le procédé étant **caractérisé en ce qu'**il comprend les étapes supplémentaires consistant à :
réaliser, si la durée du premier procédé de régénération de NOₓ est inférieure à la durée prédéterminée et afin d'essayer de neutraliser la dégénération du pot catalytique à piège à NOₓ (11), au moins une action corrective, qui comprend l'augmentation de la température de fonctionnement du pot catalytique à piège à NOₓ (11) et/ou effectuer un procédé de désulfatation non planifié ;
effectuer un second procédé de régénération de NOₓ ;
déterminer si la durée du second procédé de régénération de NOₓ est égale à la durée prédéterminée ou non ;
utiliser, si la durée du second procédé de régénération de NOₓ est égale à la durée prédéterminée, de nouveaux paramètres de fonctionnement caractéristiques pour l'action corrective pour la vie ultérieure du pot catalytique à piège à NOₓ (11) ; et
réduire, si la durée du second procédé de régénération de NOₓ est inférieure à la durée prédéterminée, la valeur estimée de la capacité de piégeage (C) du pot catalytique à piège à NOₓ (11).

2. Procédé selon la revendication 1, dans lequel le signal d'un capteur lambda de type marche/arrêt (14) agencé en aval du pot catalytique à piège à NOₓ (11) est utilisé pour déterminer si la durée d'un procédé de régénération de NOₓ est égale ou non à la durée prédéterminée.

3. Procédé selon la revendication 2, dans lequel, si aucune transition dans le signal provenant du capteur lambda (14) n'est détectée pendant le procédé de régénération de NOₓ, alors on suppose que la durée du procédé de régénération de NOₓ est égale à la durée prédéterminée alors que, si une transition dans le signal provenant du capteur lambda (14) est détectée pendant le procédé de régénération de NOₓ, alors on suppose que la durée du procédé de régénération de NOₓ est inférieure à la durée prédéterminée.

4. Procédé selon l'une des revendications 1 à 3, dans lequel l'action corrective est utilisée pour augmenter la température de fonctionnement du pot catalytique à piège à NOₓ (11) ; si la durée du second procédé de régénération de NOₓ est égale à la durée prédéterminée, alors la valeur minimum de la température de fonctionnement dudit pot catalytique à piège à NOₓ (11) est augmentée pour la vie ultérieure du pot catalytique à piège à NOₓ (11).

5. Procédé selon la revendication 4, dans lequel la valeur minimum de la température de fonctionnement du pot catalytique à piège à NOₓ (11) n'est pas augmentée au-delà d'une valeur seuil prédéterminée respective.

6. Procédé selon la revendication 4 ou 5, dans lequel la température de fonctionnement du pot catalytique à piège à NOₓ (11) est augmentée au moyen d'un certain nombre d'incréments successifs d'une taille déterminée ; après chaque incrément, la performance d'un procédé de régénération de NOₓ ultérieur est attendue et, si la durée du procédé de régénération de NOₓ ultérieur est inférieure à la durée prédéterminée, alors un incrément supplémentaire est réalisé alors que, si la durée du procédé de régénération de NOₓ ultérieur est égale à la durée prédéterminée, alors une incrémentation de la température de fonctionnement du pot catalytique à piège à NOₓ (11) est arrêtée et la valeur minimum de la température de fonctionnement dudit pot catalytique à piège à NOₓ (11) est augmentée.

7. Procédé selon la revendication 6, dans lequel la valeur de la température de fonctionnement du pot catalytique à piège à NOₓ (11) n'est pas augmentée au-delà d'une valeur seuil prédéterminée respective.

8. Procédé selon l'une des revendications 1 à 3, dans lequel l'action corrective est utilisée pour réaliser un procédé de désulfatation non planifié et, à la fin du procédé de désulfatation non planifié, pour attendre la performance d'un deuxième procédé de régénération de NOₓ ; si la durée du deuxième procédé de régénération de NOₓ est égale à la durée prédéterminée, alors la température du pot catalytique à piège à NOₓ (11) utilisé pendant les procédés de désulfatation futurs est incrémentée.

9. Procédé selon la revendication 8, dans lequel la température du pot catalytique à piège à NOₓ (11) utilisé pendant les procédés de désulfatation n'est pas modifiée au-delà d'une valeur seuil prédéterminée respective.

10. Procédé selon l'une des revendications 1 à 3, dans lequel l'action corrective est utilisée pour augmenter la température de fonctionnement du pot catalytique à piège à NOₓ (11) ; si la durée du second procédé de régénération de NOₓ est égale à la durée prédéterminée, alors la valeur minimum de la température de fonctionnement dudit pot catalytique à piège à NOₓ (11) est augmentée pour la vie ultérieure du pot catalytique à piège à NOₓ (11) ; si la durée du second procédé de régénération de NOₓ est inférieure à la durée prédéterminée, alors un procédé de désulfatation non planifié est réalisé et, à la fin du procédé de désulfatation non planifié, la performance d'un procédé de régénération de NOₓ ultérieur est attendue ; si la durée du procédé de régénération de NOₓ ultérieur est égale à la durée prédéterminée, alors la température du pot catalytique à piège à NOₓ (11) utilisé pendant les procédés de désulfatation futurs est incrémentée ; si la durée du procédé de régénération de NOₓ ultérieur est inférieure à la durée prédéterminée, alors la capacité de piégeage estimée (C) du pot catalytique à piège à NOₓ (11) est réduite.

11. Procédé selon la revendication 10, dans lequel la température de fonctionnement du pot catalytique à piège à NOₓ (11) est augmentée au moyen d'un certain nombre d'incréments successifs d'une taille déterminée ; après chaque incrément, la performance d'un procédé de régénération de NOₓ ultérieur est attendue et, si la durée du procédé de régénération de NOₓ ultérieur est inférieure à la durée prédéterminée, alors un incrément supplémentaire est réalisé alors que, si la durée du procédé de régénération de NOₓ ultérieur est égale à la durée prédéterminée, alors une incrémentation de la température de fonctionnement du pot catalytique à piège à NOₓ (11) est arrêtée et la valeur minimum de la température de fonctionnement du pot catalytique à piège à NOₓ (11) est augmentée.

12. Procédé selon la revendication 11, dans lequel la valeur de la température de fonctionnement du pot catalytique à piège à NOₓ (11) n'est pas augmentée au-delà d'une valeur seuil prédéterminée respective.

13. Procédé selon l'une des revendications 1 à 12, dans lequel la valeur prédite pour la durée du procédé de régénération de NOₓ est calculée en utilisant un modèle de stockage du pot catalytique à piège à NOₓ (11), ledit modèle étant basé sur une estimation de la capacité de piégeage (C) du pot catalytique à piège à NOₓ (11), de sorte que le procédé de régénération de NOₓ dure seulement pendant le temps qui est strictement nécessaire pour retirer les groupes de NOₓ piégés dans le pot catalytique à piège à NOₓ (11).
